# EUROPEAN PATENT APPLICATION

(11) **EP 2 701 415 A1**
(43) Date of publication of application: **26.02.2014**
(21) Application number: 12181700.1
(22) Date of filing: 24.08.2012
(51) Int. Cl.: H04W 12/04, H04L 9/08

(54) **Mobile electronic device and use thereof for electronic transactions**

(71) Applicant: Kuppuswamy, Raja, 80333 München (DE)
(72) Inventor: Kuppuswamy, Raja, 80333 München (DE)
(74) Representative: Ettmayr, Andreas

(57) **Abstract**

The user (11) opens the payment app using his individual password, selects on a menu a load function with a specific amount to the payment card (17), selects the payment method and accepts to send the payment details (Step S301). The token data set representing the payment details is sent via the wireless network (14) to the gateway system on the remote server (13) for authentication and authorization (Step S302). In order to access the respective token data set required for authorization and stored only on the mobile electronic device (1) but not on the remote server (13), a respective key is used created from the device key, the individual password and the server key (verifying data) provided by the gateway system on the remote server (13).

## Description

The present invention relates to mobile electronic devices. In particular, the present invention relates to a mobile electronic device comprising wireless communication means for connecting to a wireless network, memory means for storing data, and encryption and decryption means for encrypting and decrypting data stored in the memory means. Further, the invention relates to a method of authorizing a user for an electronic transaction using a mobile electronic device and a method for registering a user therefor.

Mobile electronic devices of the type initially mentioned are in widespread use in many different configurations, such as smartphones and tablet computers. Typically, a user can install and run so-called "apps" on mobile electronic devices which are application programs adapted to the runtime environment of the respective mobile electronic device and which can be downloaded via the wireless network for installation.

In recent times, there have been made increasing efforts to establish mobile electronic devices as a means for use in payment transactions due to certain drawbacks of conventional ways to conduct payment transactions, as discussed hereinafter, and due to the fact that an increasing number, if not the majority, of consumers carry mobile electronic devices almost wherever they go.

Among the numerous different payment instruments for carrying out financial transactions, credit cards and debit cards have become increasingly popular. The growth of electronic commerce has attributed thereto as well as the convenience of not having to count change. It is not uncommon for consumers to hold multiple credit card and/or debit card accounts concurrently. For example, a consumer may use one account for private domestic expenses, one for travel related expenses and another one for business related expenses. Further, as not all cards are accepted by all retailers, service providers etc., a user may hold additional accounts at different credit card companies. Since the number of payment accounts held per consumer increases, however, it has become increasingly inconvenient to carry such a large number of credit cards or debit cards. It is thus desirable to replace a number of plastic cards that may make wallets too bulky to be conveniently carried in pockets by respective functions in a mobile electronic device the consumer carries anyway.

As mobile electronic devices nowadays are typically connectable to the internet and have web browsers installed thereon, internet payment methods conventionally carried out using PCs are in principle also feasible for mobile electronic device users. However, the ease of use as well as the achievable degree of security may be quite different depending on whether a conventional internet payment method is carried out on a PC in a more private environment or in the public on a mobile electronic device. E.g. entering account information and access codes such as a PIN into a device is achieved much more easily sitting at a desk with both hands free and without the risk of strangers watching than standing among other people holding a mobile electronic device in one hand.

In electronic commerce, payment sites are operated offering consumers to store account data of several credit card or banking accounts in a single payment service account. When willing to initiate an electronic payment transaction, the user logs into his payment service account, typically entering a username and a password, selects the credit card or banking account through which the user wishes to process the payment, either enters additional payment details or checks electronically imported payment details before confirming payment. Often, an additional code verifying the user's authorization, such as the three or four digit security number printed on credit cards and often referred to as Card Validation Code (CVC), Card Verification Value (CVV) or Card Security Code (CSC).

US 2008/0319875 A1 discloses a system for facilitating payment transactions using mobile electronic devices enabling payments not only from a consumer to a professional provider of services or goods such as a store but also "peer to peer" from one holder of a mobile electronic device to another holder of a mobile electronic device. Therein, all relevant account data is stored in a remote server. The mobile electronic devices involved in a transaction basically function as terminals for accessing the accounts.

In recent times, consumers begin to develop reservations against electronic payment methods. In particular, they fear that their relevant account and security data may be accessed by third parties with criminal intent. Such concerns are not always unfounded. E.g. servers storing relevant data may be hacked. The media reported repeatedly about sets of credit card data stolen from servers by the thousands. Further, so-called "phishing methods" simulate payment platforms prompting the user to enter relevant security data which is then, unnoticed by the user, transferred to a third party thus enabled to access the user's account.

It is therefore one object of the present invention to eliminate or at least diminish the drawbacks of conventional payment methods. In particular, it is an object of the present invention to provide a secure and comfortable way of managing multiple transaction instruments.

In view of the above, the present invention provides, according to one aspect thereof, a mobile electronic device comprising wireless communication means for connecting to a wireless network, memory means for storing data, and encryption and decryption means for encrypting and decrypting data stored in the memory means, wherein the data includes, in encrypted form, a plurality of token data sets for enabling user authorization for an electronic transaction. The token data sets of the plurality of token data sets are adapted for mutually different transactions. The mobile electronic device further comprises enabling means for establishing, via the wireless communication means and the wireless network, a connection to a remote server for verifying the user's authentication to access the token data sets and for enabling access to the token data sets, if the user's authentication is verified. Further, the mobile electronic device comprises selection means for allowing a the user to select a token data set from the plurality of token data sets for access, and output means for outputting authorizing information for authorizing an electronic transaction based on the selected token data set.

According to another aspect of the present invention, a system for authenticating a user for an electronic transaction is provided which comprises a mobile electronic device as described above and the remote server.

According to an advantageous embodiment, the token data sets are not stored on said remote server and can thus not be accessed by hacking the server.

A plurality of transaction site servers (e.g. servers of clearing institutes or payment organizations like credit card companies, banks etc.) have stored thereon complementary data sets, each corresponding to a respective one of the token data sets.

According to one advantageous embodiments, the system may also make use of an external terminal including user ID input means for inputting a user ID and of transfer means for transferring the input user ID from the external terminal to the mobile electronic device, wherein the input user ID is used in verifying the user's authentication.

According to another aspect of the present invention, a method of authorizing a user for an electronic transaction is provided. The method comprises the step of establishing, via a mobile electronic device connected to a wireless network, a connection to a remote server for verifying the user's authentication to access a plurality of token data sets stored, in encrypted form, in the mobile electronic device. The method further comprises the steps of enabling access to the token data sets, if the user's authentication is verified, selecting, among the plurality of token data sets, a token data set, outputting authorizing information for authorizing an electronic transaction based on the selected token data set, wherein the token data sets of the plurality of token data sets are adapted for mutually different transactions.

In a preferred embodiment, the electronic transaction is an electronic payment transaction, the plurality of token data sets is adapted for mutually different payment methods, and the authorizing information is payment authorizing information for authorizing an electronic payment transaction. Thus, the present invention makes it possible to store all relevant data for authorizing an electronic payment on the user's individual electronic device. While the respective token sets can only be accessed if authentication is verified by a remote server, the remote server does not store any data of the payment account. By hacking a server the user's account data thus cannot be accessed but remains safe.

While the invention is described focussing on the electronic transaction being an electronic payment transaction, the plurality of token data sets being adapted for mutually different payment methods, and the authorizing information being payment authorizing information for authorizing an electronic payment transaction, the invention may also be advantageously carried out for other types of electronic transactions. For example, instead of relating to payment accounts, the token data sets of the present invention may include access data for other electronic accounts, e.g. passwords for social networks or company servers, access codes for telephone networks or conference servers, service codes for electronic equipment or the like.

Preferably, access of the token data sets is access code protected, i.e. the user can use the selection means or the selected token data set only after entering a personal ID such as a PIN or password. While the user can conveniently select among various payment methods having to remember only one access code, a third party cannot authorize payments from the user's accounts, even if the personal ID gets stolen (e.g. by watching the user enter it in public), unless using the user's very mobile electronic device. The access code is worthless for use on a different device.

Preferably, the mobile electronic device has stored thereon a device specific ID. In a particularly preferred embodiment, verifying the user's authentication is based on the device specific ID, a personal ID to be input by said user and verifying data supplied by the remote server. The verifying data may either be stored on the remote server and accessed either using a user specific ID or a device specific ID or both, or it may be generated on the remote server based on user specific ID or device specific ID or both. Typically the verifying data may be looked at as a server key or a server ID.

Advantageously, the enabling means comprises key generating means for generating a key necessary for decrypting the token data sets, wherein the key is generated from the device specific ID, the personal ID and the verifying data. In this manner, i.e. by generating a key for decrypting the token data sets from the device specific ID, the personal ID and the verifying data, a very high level of security is achieved by requiring data from three different sources (device, user input, remote server) in order to allow decryption of the token data sets.

Instead of or in addition to a personal ID code, access of the token data sets may also be protected by biometric methods, e.g. a fingerprint scanner. The skilled person will readily understand that mobile electronic devices having biometric user identification and authentication means may be adapted accordingly.

According to one advantageous embodiment, the invention can make use of a payment card similar to a conventional payment card, like credit or debit cards with a magnetic strip or an on-card chip. However, instead of holding multiple credit and debit cards, the user may then hold one single card instead of multiple cards. In such an embodiment, the payment card serves only for identifying a prepaid account of the holder to be debited (instead of directly debiting a bank account or credit card account of the user), whereas the mobile electronic device authorizes a transaction from any credit card account, bank account or the like to the prepaid account.

In a preferred embodiment, the output means include means for transmitting the authorizing information via the wireless communication means and the wireless network. The mobile electronic device may then be used in all instances where conventional internet payment methods have been useful, e.g. payments to online retailers or (ticket, hotel etc.) booking platforms.

According to another aspect, the present invention also provides a method for registering a user for authorizing the user for electronic transactions. The method comprises the steps of establishing, via a mobile electronic device connected to a wireless network, a connection to a remote server, creating, on the server, user verifying data using a personal ID specific to the user and/or a device specific ID stored on the mobile electronic device, storing, in encrypted form, a plurality of token data sets for authorizing the user in the electronic transactions, wherein the token data sets are stored such that they are accessible only using the user verifying data, wherein token data sets of said plurality of token data sets are adapted for mutually different transactions.

The present invention not only facilitates selective use of multiple token data sets (such as credit card details and the like) and increases at the same time the achievable level of security. The present invention also allows implementation of highly useful operations: When the electronic mobile device gets lost or stolen, it is possible to block, via the remote server, access to the stored token data sets. For this, it is only necessary to configure the remote server to deny user authentication if a connection to the remote server is established by enabling means of a mobile electronic device that has been reported lost or stolen.

Generally, any of the embodiments described or options mentioned herein may be particularly advantageous depending on the actual conditions of application. Further, features of one embodiment may be advantageously combined with features of another embodiment as well as features known per se from the prior art as far as technically possible and unless indicated otherwise.

The invention will now be described in more detail. The accompanying drawings, which are purely schematic illustrations, serve for a better understanding of the features of the present invention. Therein:
- Fig. 1: shows, schematically and not drawn to scale, a mobile electronic device according to an advantageous embodiment of the present invention.
- Fig. 2: shows a flow scheme of a registration procedure for registering a mobile electronic device for payment transactions according to the present invention.
- Fig. 3: shows a flow scheme of a payment transaction flow using the mobile electronic device in e-commerce.
- Fig. 4: shows a flow scheme of a payment transaction using an inventive mobile electronic device at a point of sale employing a payment card.
- Fig. 5: shows another flow scheme of a payment transaction using an inventive mobile electronic device at a point of sale employing a payment card.
- Fig. 6: shows a flow scheme of a payment transaction at a point of sale or peer to peer using near field communication (NFC) or radio frequency identification (RFID) techniques.
- Fig. 7: shows a flow scheme of a payment transaction at a point of sale or peer to peer using matrix bar code techniques.
- Fig. 8: shows a flow scheme of a payment transaction at a point of sale terminal using the PIN keypad of the point of sale terminal.

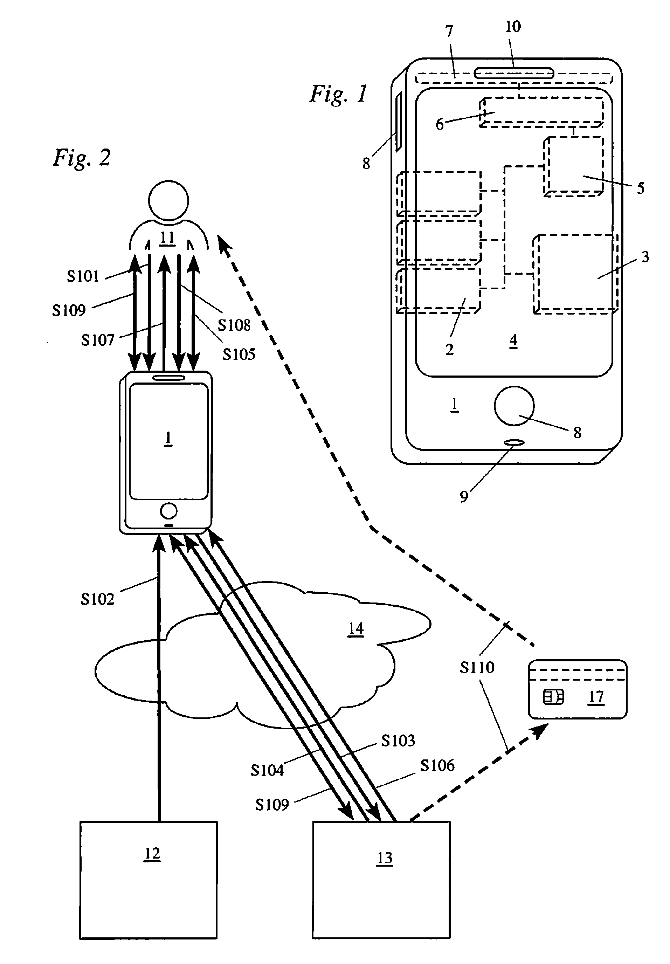

Fig. 1 shows a schematic diagram of a mobile electronic device 1 according to an advantageous embodiment of the present invention. Typically, such as the device 1 shown, a mobile electronic device 1 according to present invention may be based on a conventional smartphone or tablet computer or the like, wherein the encryption and decryption means, enabling means and selection means are implemented in software stored in the memory 2 of the device I and executed by the processor 3 of the device 1 controlling conventional hardware components, in particular a touch screen display 4, a wireless I/O unit 5 connected to a receiver/transmitter device 6 with an antenna 7, one or more hardware buttons 8, a microphone 9, a speaker 10 and other components which are per se well known to the skilled person for operating a mobile electronic device 1.

Typically, the mobile electronic device 1 has installed thereon system software conventionally known for operation of smartphones, tablet computers or the like and capable of running apps downloaded via the internet using a wireless local area network (WLAN) access point or a mobile telephone network, e.g. according to UMTS standard. Further, for operating the mobile electronic device 1 has installed thereon a graphical user interface (GUI), which is operable using the touch screen display 4, as known per se from conventional mobile electronic devices.

The function of the inventive features in connection with the standard hardware of the mobile electronic device 1 will become apparent from the following.

Fig. 2 shows a flow scheme of a registration procedure. A user 11 initiates, through a conventional internet browser or proprietary downloading utility program, download of a payment app (Step S101) adapted for carrying out, once installed, the functions of the enabling means and selection means according to the present invention as described herein. The mobile electronic device 1 downloads, from a server 12 via the wireless network 14 and installs the payment app (Step S102). When first used, the app prompts the prompted, on the display 4, to register inputting user information such as the user's 11 first name, last name, date of birth, email ID and MSISDN / mobile phone number information. The app generates a public unique ID to identify the device and stores the public unique device ID in the memory 2 of the mobile electronic device 1. The payment app is registered to any cloud messaging service and a registration confirmation ID is received.

The payment app establishes, via the wireless I/O unit 5, a connection of the mobile electronic device 1 to a remote server 13 (Step S103), and the basic user information, public unique device ID, and messaging service registration confirmation ID are sent to a gateway system installed on the remote server 13 in an XML data format along with a hash signature.

The gateway system, upon receiving the XML data, verifies the hash signature, creates a user scheme data from user information, public unique device ID, and messaging service registration confirmation ID along with a server key (verifying data) and stores it in a database.

Then, the gateway system creates a verification code with a status "email not verified", sends a verification email to the user's 11 email address (step not illustrated in Fig. 2), and the registration response with "email not verified" status to the payment app on the mobile electronic device 1 (Step S104).

The payment app updates the registration status and shows, on the display 4, the message that the user 11 has to verify the the email address to complete the registration process (Step S105). When the user 11 opens the email and selects a respective link (step not illustrated in Fig. 2), the gateway system updates the status of the verification code to "email verified" and sends a respective message via messaging service using the registration confirmation ID to the electronic mobile device 1 (Step S106).

Upon receiving the message, the payment app updates the registration status to "email verified" and shows, on the display 4, a notification message to the user 11 to complete registration. Before further using the payment app, the user 11 is prompted, on the display 4, to enter an individual password or PIN (minimum 4 digits) for future use by the user 11 (Step S 107). Whenever the user 11 wishes to use the payment app, he may open the payment app e.g. by finger-pointing a respective icon on the touch screen display 4 and will then be prompted to enter his individual password or PIN for access.

The payment app will use the individual password or PIN and a device key, which is always generated from mobile electronic device information at runtime and not stored on the mobile electronic device 1, to encrypt the public unique device ID and store it in the memory 2.

The user 11 can now enter and store in the memory 2 token data sets representing payment instrument details necessary for authorizing a payment transaction using the respective payment instrument, e.g. credit card or debit card. In order to create a respective token data set, the user enters payment instrument details such as card number, holder name, CVV, PIN, expiry date etc. into a respective data input mask displayed on the display 4 (Step S 108).

When the user 11 selects to save the token data sets in the memory 2, the payment app establishes, via the wireless network 14, a connection to the gateway system on the remote server 13, the payment app prompts, on the display 4, the user 11 to re-enter the individual password or PIN (only if the session has expired), the payment app decrypts the public device identifier stored in the memory 2 using the individual password or PIN and the device key and sends the public device identifier and the user's 11 email ID to the gateway system. On successful identification of the user scheme data using the public unique device ID and the email ID of the user 11, the gateway system sends the server key (verifying data) to the payment app as response (Step S 109).

For storing the token data sets in the memory 2, the payment app creates a 128 Bit key from the device key, individual password or PIN and the server key and encrypts the token data sets using advanced encryption messages, e.g. Rijndael algorithms.

The token data sets representing the payment instrument details are stored only on the device 1 but neither transmitted to nor stored in the remote server 13.

If the user 11 wants to use a payment card 17 for use in common card readers, he may, in the registration process, enter some additional details like shipping address details and required KYC (know your customer) information then transmitted via the wireless network 14 to the gateway system on the remote server 13. A respective payment card 17 will then be sent to the user's address (Step S110).

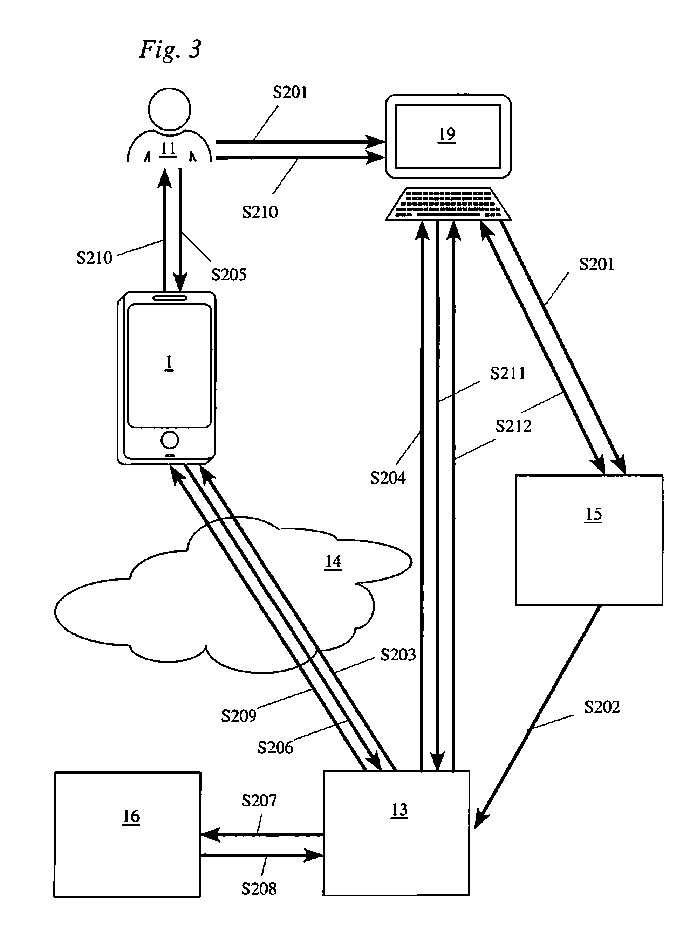

Fig. 3 shows a flow scheme of a payment transaction flow using the mobile electronic device 1 in e-commerce, e.g. with an internet retailer or an online ticket booking platform.

The user 11 accesses and communicates with the e-commerce site 15 using a device other than the mobile electronic device 1, e.g. a personal computer 19 with an internet browser. Optionally, the user 11 may access the e-commerce site via the wireless network 14 in the same manner as communication with such sites is conventionally achieved using mobile electronic devices.

The user 11 selects use of his electronic mobile device 1 as payment method during the payment process to the e-commerce site 15 and enters only his mobile number or email ID along with a CAPTCHA (Step S201).

The payment request is sent or forwarded from the e-commerce site 15 to the gateway system on the remote server 13 (Step S202).

The gateway system sends a payment notification message to the electronic mobile device 1 (Step S203) and transmits to the personal computer 19 a challenge and response page displayed by a browser and prompting the user 11 to enter a response for payment confirmation (Step S204).

The user 11 starts the payment app e.g. by selecting the notification message or by finger-pointing a respective icon on the touch screen display 4. The user can accept the payment and enter his individual password to access a menu displayed on the display 4 for selecting his desired payment method (i.e. payment instrument) and accept to send the details for authorization (Step S205). The electronic mobile device 1 sends the payment details to the gateway system on the remote server 13 for authorization (Step S206).

As is clear from the above, in order to access the respective token data set required for authorization and stored on the mobile electronic device 1, a respective key is used which is created from the device key, the individual password and the verifying data provided by the remote server 13.

The gateway system connects with the payment processing company 16 corresponding to the selected payment method (Step S207) and receives an authorization response from the respective payment processing company 16 (Step S208). Upon successful authorization, the gateway system sends, via the wireles network 14, a one time transaction confirmation number (TCN) to the mobile electronic device 1 (Step S209).

The user 11 enters the transaction confirmation number on the challenge and response page displayed by the personal computer 19 (Step S210). The response is forwarded to the gateway system for verification and validation (Step S211). The gateway system verifies and validates the TCN, completes the payment process and redirects the browser of the personal computer 19 back to the success or failure page of the e-commerce site (Step S212).

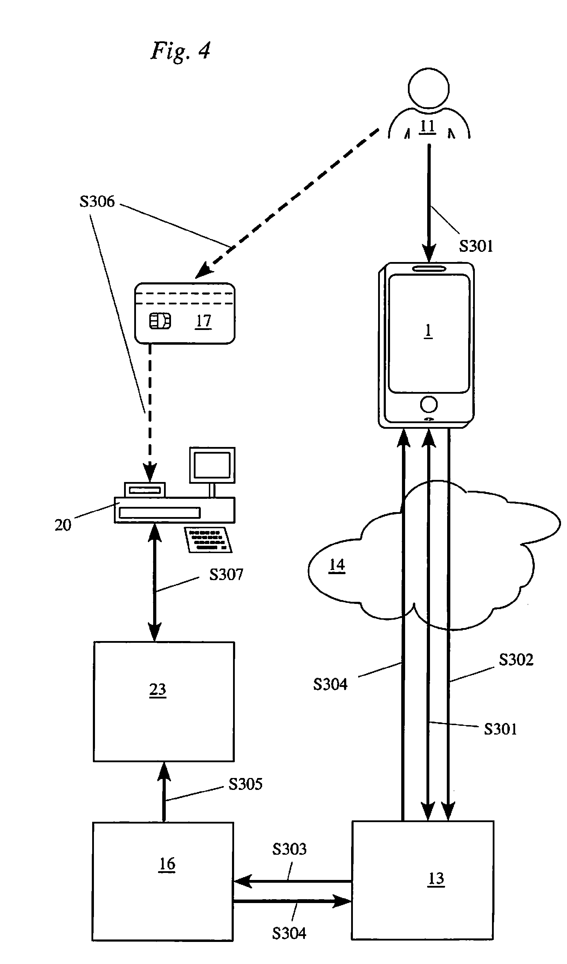

Fig. 4 shows a flow scheme of a payment transaction using the mobile electronic device 1 at a point of sale 20 employing a payment card 17.

The user 11, who wants to load a specific amount onto the payment card, opens the payment app using his individual password, selects on a menu a load function with a specific amount to the payment card, selects the payment method and accepts to send the payment details (Step S301).

The token data set representing the payment details is sent via the wireless network 14 to the gateway system on the remote server 13 for authentication and authorization (Step S302). As is clear from the above, in order to access the respective token data set required for authorization and stored on the mobile electronic device 1, a respective key is used created from the device key, the individual password and the server key (verifying data) provided by the gateway system (remote server 13).

The gateway system connects with the payment processing company 16 corresponding to the selected payment method (Step S303) and receives an authorization response from the respective payment processing company 16 (Step S304) which is forwarded to the mobile electronic device 1 which displays a confirmation. Upon successful authorization, the specified amount is transferred from the payment processing company 16 to a user's prepaid account 23 (Step S305). Implementations are possible wherein the prepaid account 23 is managed by the remote server 13 as well as implementations wherein the prepaid account 23 is managed by the server of a designated financial institution.

The user 11 can then use the payment card 17 like a conventional prepaid card to pay at any point of sale 20 for the amount equal or less than the amount available on the prepaid account 23 (Step S306). Therein, the on-card chip 18 of the payment card 17 serves for identifying the prepaid 23 account to the point of sale 20. The point of sale 20 connects to the server managing the prepaid account 23 in order to complete a payment (Step S307).

The user 11 can repeat the process for reloading the payment card.

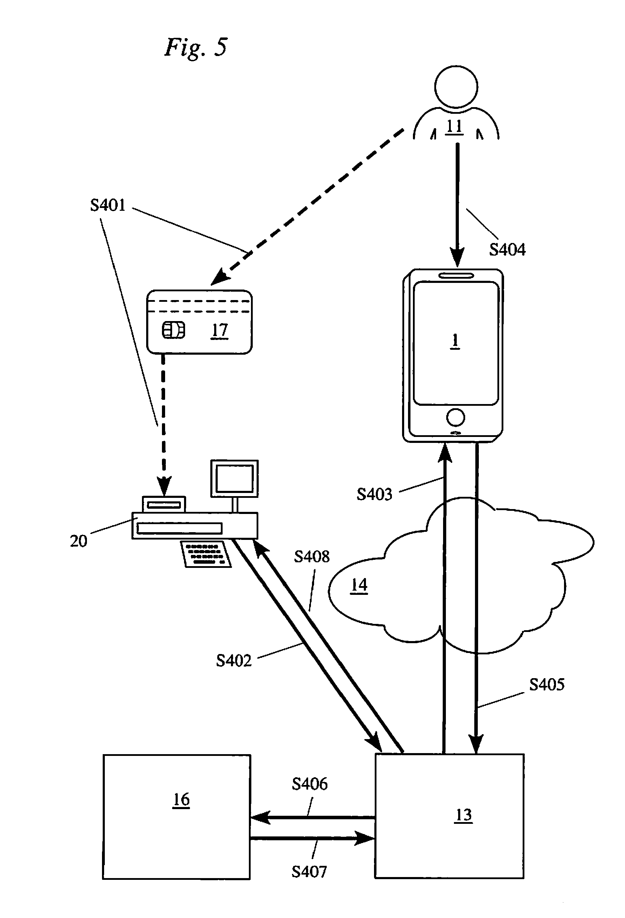

Fig. 5 shows another flow scheme of a payment transaction using the mobile electronic device 1 at a point of sale 20 using the payment card 17.

The user 11 inserts the payment card 17 into a conventional card reader at the point of sale 20 (Step S401). The point of sale 20 sends card and payment information to the gateway system on the remote server 13 (Step S402). The gateway system sends, via the wireless network 14, a payment notification message to the user's 11 mobile electronic device 1 (Step S403).

The user 11 starts the payment app e.g. by selecting the notification message or by finger-pointing a respective icon on the touch screen display 4. The user can accept the payment and enter his individual password to access a menu displayed on the display 4 for selecting his desired payment method (i.e. payment instrument), e.g. credit card payment, and accept to send the details for authorization (Step S404). The electronic mobile device 1 sends the payment details to the gateway system on the remote server 13 for authorization (Step S405). As is clear from the above, in order to access the respective token data set required for authorization and stored on the mobile electronic device 1, a respective key is used created from the device key, the individual password and the verifying data provided by the gateway system (remote server 13).

The gateway system connects with the payment processing company 16 corresponding to the selected payment method (Step S406) and receives an authorization response from the respective payment processing company 16 (Step S407). Upon successful authorization, the gateway system sends an authorization response to the merchant, i.e. the point of sale 20 (Step S408).

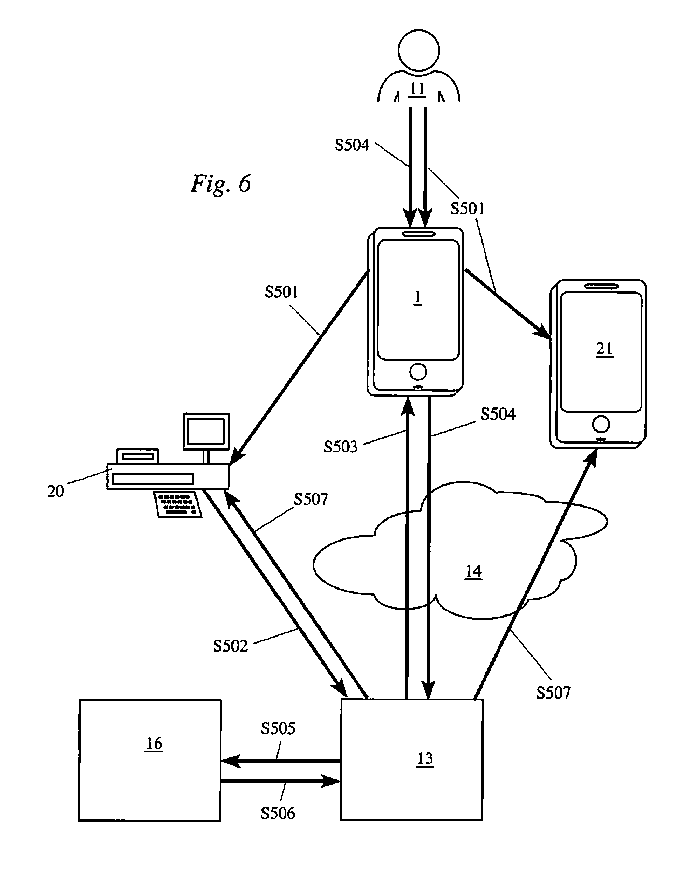

Fig. 6 shows a flow scheme of a payment transaction at a point of sale or peer to peer using near field communication (NFC) or radio frequency identification (RFID) techniques.

The user 11 selects, using the graphical user interface operated via the touch screen display 4, on his mobile electronic device 1 an NFC or RFID payment communication path to a point of sale 20 merchant or another electronic mobile device 21 equipped with respective NFC or RFID means (Step S501). Needless to say that the user's 11 mobile electronic device, in this embodiment, is equipped with an NFC and/or RFID transmitter/receiver as known per se from the prior art. Optionally, establishing the NFC or RFID payment communication path may be controlled by the payment app.

The point of sale 20 or other user's electronic mobile device 21 sends a payment request to the gateway system on the remote server 13 (Step S502). The gateway system sends, via the wireless network 14, a payment notification message to the user's 11 mobile electronic device 1 (Step S503).

The user 11 selects the notification message on the touch screen display 4. The user can accept the payment and enter his individual password to access a menu displayed on the display 4 for selecting his desired payment method (i.e. payment instrument), e.g. credit card payment, and accept to send the details for authorization, and the electronic mobile device 1 sends the payment details to the gateway system on the remote server 13 for authorization (Step S504). As is clear from the above, in to access the respective token data set required for authorization and stored on the mobile electronic device 1, a respective key is used created from the device key, the individual password and the verifying data provided by the gateway system (remote server 13).

The gateway system connects with the payment processing company 16 corresponding to the selected payment method (Step S505) and receives an authorization response from the respective payment processing company 16 (Step S506). Upon successful authorization, the gateway system sends an authorization response to the merchant, i.e. the point of sale 20, or the other user's electronic mobile device 21, respectively (Step S507).

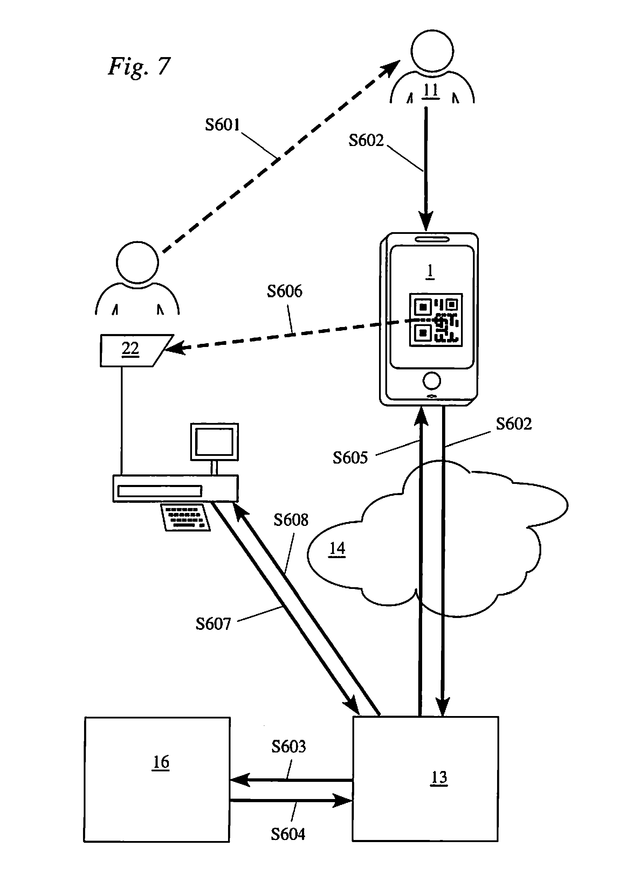

Fig. 7 shows flow scheme of a payment transaction at a point of sale 20 or peer to peer using matrix bar code or quick response code (QR) techniques.

The user 11 receives an invoice or bill from a merchant or from another person (Step S601). The user 11 starts the payment app e.g. by finger-pointing a respective icon on the touch screen display 4. The user 11 has to enter his individual password to select matrix bar code voucher mode and to access a menu displayed on the display 4 for selecting his desired payment method (i.e. payment instrument), e.g. credit card, and initiates sending the details (i.e. a respective token data set) for authorization. The electronic mobile device 1 connects via the wireless network 14 to the remote server 13 and sends the payment details to the gateway system for authorization (Step S602). As is clear from the above, in order to access the respective token data set required for authorization and stored on the mobile electronic device 1, a respective key is used created from the device key, the individual password and the verifying data provided by the gateway system (remote server 13).

The gateway system connects with the payment processing company 16 corresponding to the selected payment method (Step S603) and receives an authorization response from the respective payment processing company 16 (Step S604). Upon successful authorization, the gateway system creates display data for displaying a matrix bar code voucher and sends the display data to the user's 11 electronic mobile device 1 (Step S605). Based on the display data, the user's 11 electronic mobile device 1 creates a matrix bar code voucher for the desired amount on the display 4, which the user can show to the merchant or other person (Step S606).

The merchant or other person scans the matrix bar code voucher using a matrix bar code reader 22 that sends it to the gateway system on the remote server 13 (Step S607). The gateway system validates and verifies the scanned matrix bar code and sends authorization response to the merchant or other person (Step S608).

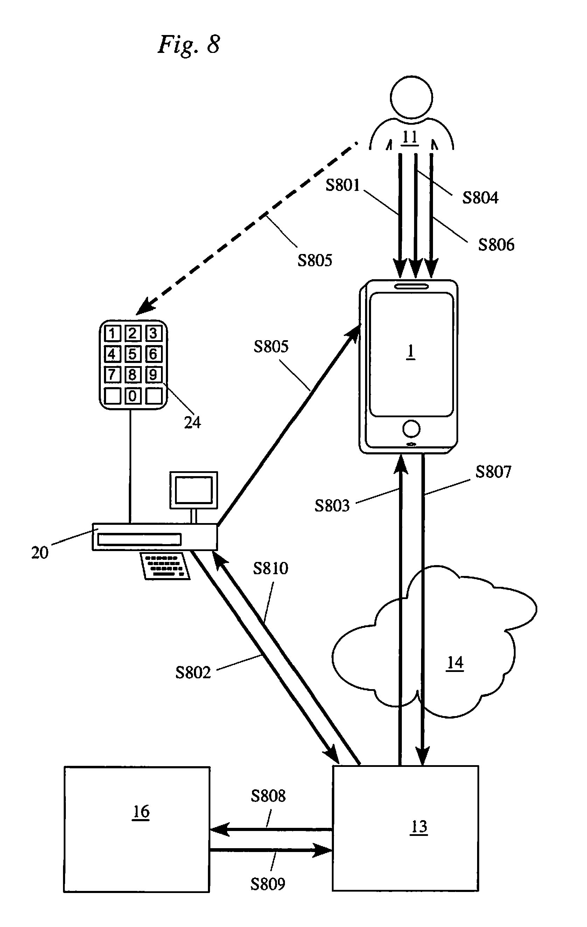

Fig. 8 shows a flow scheme of a payment transaction at a point of sale using near field communication (NFC) or radio frequency identification (RFID) techniques.

The user 11 selects, using the graphical user interface operated via the touch screen display 4, on his mobile electronic device 1 an NFC or RFID payment communication path to a point of sale 20 merchant with respective NFC or RFID means (Step S801). Needless to say that the user's 11 mobile electronic device, in this embodiment, is equipped with an NFC and/or RFID transmitter/receiver as known per se from the prior art. Optionally, establishing the NFC or RFID payment communication path may be controlled by the payment app.

The point of sale 20 or other user's electronic mobile device 21 sends a payment request to the gateway system on the remote server 13 (Step S802). The gateway system sends, via the wireless network 14, a payment notification message to the user's 11 mobile electronic device 1 (Step S803). The user can accept the payment (Step S804) and will be prompted to enter his user PIN on the PIN pad (key pad) 24 of the point of sale terminal 20. Upon entering the PIN, the PIN will be transferred by way of NFC or RFID to the mobile electronic device 1 (Step S805) causing a menu on the display 4 to open for selecting his desired payment method (i.e. payment instrument), e.g. credit card payment (Step S806). The electronic mobile device 1 sends the selected payment details to the gateway system on the remote server 13 for authorization (Step S807). As is clear from the above, in order to access the respective token data set required for authorization and stored on the mobile electronic device 1, a respective key is used created from the device key, the entered user PIN and the verifying data provided by the gateway system (remote server 13).

The gateway system connects with the payment processing company 16 corresponding to the selected payment method (Step S808) and receives an authorization response from the respective payment processing company 16 (Step S809). Upon successful authorization, the gateway system sends an authorization response to the merchant, i.e. the point of sale 20 (Step S810).

## Claims

1. Mobile electronic device comprising
wireless communication means for connecting to a wireless network,
memory means for storing data, and
encryption and decryption means for encrypting and decrypting data stored in said memory means,
**characterized**
**in that** said data includes, in encrypted form, a plurality of token data sets for enabling user authorization for an electronic transaction, wherein token data sets of said plurality of token data sets are adapted for mutually different transactions, and
**in that** said mobile electronic device further comprises:
enabling means for establishing, via said wireless communication means and said wireless network, a connection to a remote server for verifying said user's authentication to access said token data sets and for enabling access to said token data sets, if said user's authentication is verified,
selection means for allowing a user to select a token data set from said plurality of token data sets for access, and
output means for outputting authorizing information for authorizing an electronic transaction based on said selected token data set.

2. Mobile electronic device according to claim 1, wherein said electronic transaction is an electronic payment transaction, said plurality of token data sets are adapted for mutually different payment methods, and said authorizing information is payment authorizing information for authorizing an electronic payment transaction.

3. Mobile electronic device according to any of the preceding claims, wherein said output means include means for transmitting said authorizing information via said wireless communication means and said wireless network.

4. Mobile electronic device according to any of the preceding claims, wherein said mobile electronic device has stored thereon a device specific ID.

5. Mobile electronic device according to claim 6, wherein verifying said user's authentication is based on said device specific ID, a personal ID to be input by said user and verifying data supplied by said server.

6. Mobile electronic device according to claim 5, wherein said enabling means comprises key generating means for generating a key necessary for decrypting said token data sets, wherein said key is generated from said device specific ID, said personal ID and said verifying data.

7. System for authenticating a user for an electronic transaction, said system comprising a mobile electronic device according to any of the preceding claims and said remote server.

8. System according to claim 7, wherein said token data sets are not stored on said remote server.

9. System according to any of claims 7 or 8, further comprising a plurality of transaction site servers, wherein each of said transaction site servers has stored thereon a complementary data set corresponding to one of said token data sets.

10. System according to any of claims 7-9, further comprising
an external terminal including user ID input means for inputting a user ID,
transfer means for transferring the input user ID from said external terminal to said mobile device,
wherein verifying said user's authentication makes use of said input user ID.

11. Method of authorizing a user for an electronic transaction,
**characterized in that** said method comprises the steps of
establishing, via a mobile electronic device connected to a wireless network, a connection to a remote server for verifying said user's authentication to access a plurality of token data sets stored, in encrypted form, in said mobile electronic device,
enabling access to said token data sets, if said user's authentication is verified, selecting, among said plurality of token data sets, a token data set,
outputting authorizing information for authorizing an electronic transaction based on said selected token data set,
wherein token data sets of said plurality of token data sets are adapted for mutually different transactions.

12. Method according to claim 11, wherein said electronic transaction is an electronic payment transaction, said plurality of token data sets are adapted for mutually different payment methods, and said authorizing information is payment authorizing information for authorizing an electronic payment transaction.

13. Method according to any of claims 11-13, wherein verifying said user's authentication is based on a device specific ID stored in said mobile electronic device, a personal ID to be input by said user and verifying data supplied by said server.

14. Method according to claim 13, comprising a step of generating a key for decrypting said token data sets from said device specific ID, said personal ID and said verifying data.

15. Method for registering a user for authorizing said user for electronic transactions, **characterized in that** said method comprises the steps of
establishing, via a mobile electronic device connected to a wireless network, a connection to a remote server,
creating, on said server, user verifying data using a personal ID specific to said user and/or a device specific ID stored on said mobile electronic device,
storing, in encrypted form, a plurality of token data sets for authorizing said user in said electronic transactions, wherein said token data sets are stored such that they are accessible only using said user verifying data,
wherein token data sets of said plurality of token data sets are adapted for mutually different transactions.
